# EUROPÄISCHE PATENTSCHRIFT

(11) **EP 4 421 579 B1**
(45) Veröffentlichungstag und Bekanntmachung des Hinweises auf die Patenterteilung: **26.08.2026**
(21) Anmeldenummer: 24158639.5
(22) Anmeldetag: 20.02.2024
(51) Int. Cl.: G05B 23/02, B62D 5/04

(54) **STEUERGERÄT EINER KRAFTFAHRZEUGLENKUNG MIT VERSCHLEISSSCHÄTZEINRICHTUNG**
CONTROL DEVICE OF A MOTOR VEHICLE STEERING SYSTEM WITH WEAR ESTIMATION DEVICE
APPAREIL DE COMMANDE DE DIRECTION DE VÉHICULE AUTOMOBILE AVEC DISPOSITIF D'ESTIMATION D'USURE

(30) Priorität: 24.02.2023 BE 202305138
(43) Veröffentlichungstag der Anmeldung: 28.08.2024
(73) Patentinhaber: thyssenkrupp Presta Aktiengesellschaft, 9492 Eschen (LI); thyssenkrupp AG, 45143 Essen (DE)
(72) Erfinder: Simon, Gábor, 2051 Biatorbágy (HU); Ordasi, Gabor, 2049 Diosd (HU)
(74) Vertreter: thyssenkrupp Intellectual Property GmbH

(56) Entgegenhaltungen:
- EP-A2- 1 306 287

## Beschreibung

Die vorliegende Erfindung betrifft ein Steuergerät einer Kraftfahrzeuglenkung, also ein Kraftfahrzeuglenkungssteuergerät, mit den Merkmalen des Oberbegriffs des Anspruchs 1, eine Kraftfahrzeuglenkung mit einem solchen Steuergerät sowie ein Verfahren zur Steuerung einer Kraftfahrzeuglenkung.

Einem Steuergerät einer Kraftfahrzeuglenkung wird eine vordefinierte Lebensdauer zugeordnet. Nach Ablauf der Lebensdauer kann nicht mehr mit der notwendigen Wahrscheinlichkeit sichergestellt werden, dass alle Hardwarekomponenten des Steuergeräts voll funktionsfähig sind, was zu einem sicherheitskritischen Ausfall führen kann. Zum Beispiel kann es vorkommen, dass bei einer Steer-by-Wire-Lenkung nach Ablauf der Lebensdauer des Steuergerätes die Zahnstangenposition nicht mehr kontrolliert werden kann.

In der EP 1 306 287 A2 wird ein elektromechanisches Lenksystem offenbart, das zur Bereitstellung einer Lenkunterstützung einen Elektromotor und eine elektronische Steuereinheit zur Steuerung des Elektromotors umfasst. Insbesondere um bewerten zu können, ob die Steuereinheit oder der Elektromotor im Falle einer Verschrottung des Kraftfahrzeugs noch weiter verwendet werden können, wird eine Verschleißschätzeinrichtung offenbart, die basierend auf einer gemessenen Temperatur unter Nutzung einer Arrhenius-Gleichung ein Lebensalter und, als Kehrwert davon, eine Verschleißgeschwindigkeit bestimmt.

Es ist daher Aufgabe der vorliegenden Anmeldung ein Steuergerät sowie ein Verfahren zur Steuerung einer Kraftfahrzeuglenkung anzugeben, die vor Ablauf der Lebensdauer des Steuergerätes warnen, so dass ein frühzeitiger Ersatz möglich ist.

Diese Aufgabe wird von einem Steuergerät mit den Merkmalen des Anspruchs 1, sowie von einem Verfahren zur Steuerung einer Kraftfahrzeuglenkung mit den Merkmalen des Anspruchs 5 gelöst.

Demnach ist ein Steuergerät einer Kraftfahrzeuglenkung vorgesehen, das eine Verschleißschätzeinrichtung aufweist, die basierend auf einer gemessenen Temperatur mittels Arrhenius-Modell eine verstrichene Lebensdauer schätzt und daraus basierend auf einer vordefinierten Gesamtlebensdauer der Steuergeräte-Hardware einen Verschleißgrad der Steuergeräte-Hardware bestimmt, wobei die Verschleißschätzeinrichtung eine Verschleißwarnkomponente umfasst, die dazu ausgebildet ist, bei Überschreiten eines vordefinierten Verschleißgradschwellenwertes ein Warnsignal auszugeben.

Es kann somit verhindert werden, dass das Ende der Lebensdauer der Steuergeräte-Hardware ohne Warnung erreicht wird.

Erfindungsgemäß ist die vordefinierte Gesamtlebensdauer der Steuergeräte-Hardware die vordefinierte Gesamtlebensdauer von DC-Link-Kondensatoren der Steuergeräte-Hardware. So wurde festgestellt, dass die in dem Steuergerät des Handkraftaktuators und des Radwinkelstellers befindlichen DC-Link-Kondensatoren (Zwischenkreiskondensatoren) am schnellsten das Lebensdauerende erreichen. Sie erreichen das Lebensdauerende regelmäßig 10x schneller als die verbauten MOSFETs und regelmäßig 100x schneller als andere elektronische Komponenten. Sie sind somit die ausschlaggebenden Komponenten, sodass die Schätzung des Verschleißgrades der gesamten Steuergeräte-Hardware vorteilhafterweise auf der verstrichenen Lebensdauer der DC-Link-Kondensatoren basiert.

Weiter vorteilhaft ist vorgesehen, dass das Arrhenius-Modell als Exponentialfunktion, Look-up-Tabelle oder Polynomfunktion 4. oder 6. Ordnung implementiert ist.

Gemäß einer weiteren vorteilhaften Ausgestaltung ist die gemessene Temperatur die gemessene Temperatur der Platine des Steuergerätes oder die gemessene Kerntemperatur des Prozessors des Steuergerätes. Vorteilhafterweise ist so die Messstelle nahe an den DC-Link-Kondensatoren, sodass die gemessene Temperatur die Temperatur an den DC-Link-Kondensatoren gut annähert.

Eine weitere vorteilhafte Ausgestaltung sieht vor, dass das Steuergerät eine Speichereinheit umfasst, wobei das Steuergerät eingerichtet ist, ein Diagnose-Ereigniscode zu speichern, wenn ein geschätzter Verschleißgrad einen vordefinierten ersten Schwellenwert überschreitet. Weiter vorteilhaft ist das Steuergerät eingerichtet, bei Überschreiten eines zweiten Schwellenwertes, der insbesondere größer ist, als der erste Schwellenwert, eine Warnleuchte anzusteuern, sodass diese aktiviert wird.

Weiterhin ist eine Kraftfahrzeuglenkung mit einem Steuergerät vorgesehen, wobei die Kraftfahrzeuglenkung bevorzugt eine Steer-by-Wire-Lenkung ist und das Steuergerät dem Handkraftaktuator oder dem Radwinkelsteller zugeordnet ist.

Außerdem ist ein Verfahren zur Steuerung einer Kraftfahrzeuglenkung aufweisend ein Steuergerät und eine Verschleißschätzeinrichtung mit Verschleißwarnkomponente vorgesehen, wobei das Verfahren die folgenden Schritte umfasst:
a. Schätzen einer verstrichenen Lebensdauer der Steuergeräte-Hardware basierend auf einer gemessenen Temperatur mittels Arrhenius-Modell,
b. Umwandeln der geschätzten verstrichenen Lebensdauer der Steuergeräte-Hardware mittels einer vordefinierten Gesamtlebensdauer der Steuergeräte-Hardware in einen prozentualen Verschleißgrad,
c. Weitergabe des geschätzten Verschleißgrades an eine Verschleißwarnkomponente und Ausgabe eines Warnsignals, wenn der geschätzte Verschleißgrad einen vordefinierten Schwellenwert überschreitet.

Es ergeben sich die oben genannten Vorteile.

Erfindungsgemäß ist die in Schritt b. verwendete vordefinierte Gesamtlebensdauer die vordefinierte Gesamtlebensdauer der DC-Link-Kondensatoren, da diese die Lebensdauer der als Einheit gesehenen Steuergeräte-Hardware maßgebend beeinflussen.

Das Arrhenius-Modell in Schritt a. kann als Exponentialfunktion, Look-up-Tabelle oder Polynomfunktion 4. oder 6. Ordnung implementiert sein.

Vorzugsweise ist die gemessene Temperatur die gemessene Temperatur der Platine des Steuergerätes oder die gemessene Kerntemperatur des Prozessors des Steuergerätes.

Es ist vorteilhaft, wenn zwei Warnstufen vorgesehen sind. Bevorzugt werden in Schritt c. zwei vordefinierte Schwellenwerte verwendet, wobei bei Überschreiten des ersten Schwellenwertes ein Diagnose-Ereigniscode gespeichert wird und bei Überschreiten des zweiten Schwellenwertes eine Warnleuchte über den Fahrzeugkommunikationsbus aktiviert wird. Der zweite Schwellenwert liegt bevorzugt oberhalb des ersten Schwellenwertes.

Bei der Kraftfahrzeuglenkung handelt es sich bevorzugt um eine Steer-by-Wire-Lenkung, wobei der
Eine bevorzugte Ausführungsform der Erfindung wird nachfolgend anhand der Zeichnungen näher erläutert. Es zeigen:
- Fig. 1:: eine schematische Darstellung einer Steer-by-Wire-Lenkung eines Kraftfahrzeuges, sowie
- Fig. 2:: ein Blockdiagramm zur Bestimmung eines Verschleißgrades der Steuergeräte-Hardware einer Kraftfahrzeuglenkung.

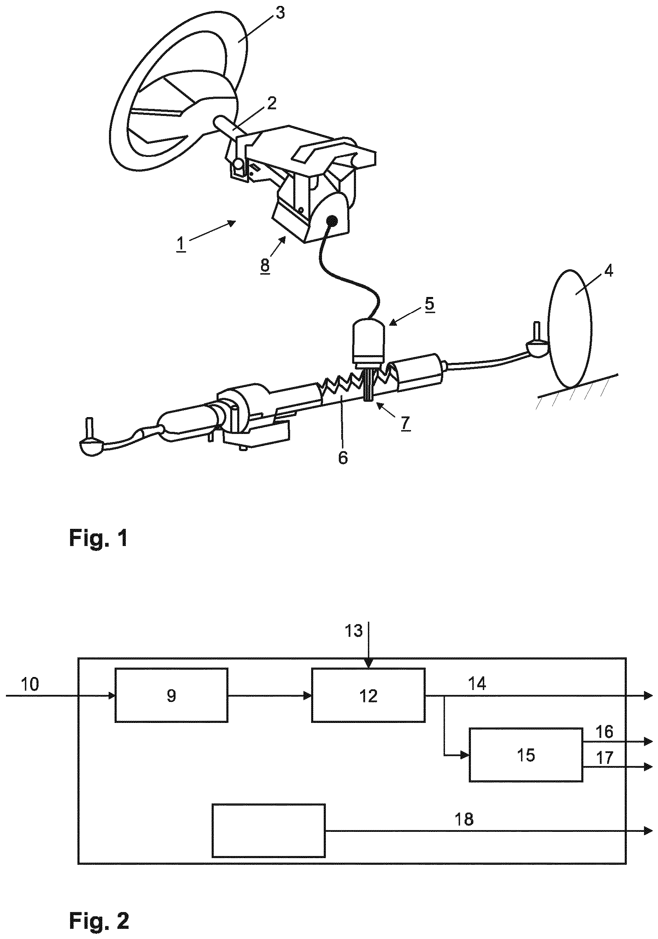

In der Figur 1 ist eine Steer-by-Wire-Lenkung 1 mit einer Lenkwelle 2, die mit einem Lenkrad 3 verbunden ist, dargestellt. Wenn ein Fahrer das Lenkrad 3 betätigt, dreht sich die Lenkwelle 2. Die Drehbewegung wird von einem Sensor erfasst, der in der Zeichnung nicht dargestellt ist. Es besteht keine mechanische Verbindung zwischen dem Lenkrad 3 und den Rädern 4. Ein erstes Steuergerät berechnet aus dem vom Sensor erfassten Signal ein Betätigungssignal für einen Radwinkelsteller 5. Der Radwinkelsteller 5 treibt über ein Zahnstangengetriebe 7 eine Zahnstange 6 an und lenkt dadurch die Räder 4. Gleichzeitig werden die von den Rädern 4 in die Zahnstange 6 eingeleiteten Kräfte von einem anderen, in den Zeichnungen nicht dargestellten Sensor erkannt und ein Rückkopplungssignal berechnet, das von einem Handkraftaktuator 8, auch Feedback-Aktuator genannt, zur Simulation der Rückstellkräfte an die Lenkwelle 2 weitergeleitet wird, so dass für den Fahrer die Rückkopplung am Lenkrad 3 spürbar ist. Der Handkraftaktuator ist mit einem zweiten Steuergerät (ECU) zur Steuerung des Rückstellmoments ausgestattet. Sowohl das erste als auch das zweite Steuergerät verschleißen und haben damit einhergehend eine begrenzte Lebensdauer.

Figur 2 zeigt ein Blockdiagramm zur Schätzung eines Verschleißgrades einer Steuergeräte-Hardware. Das Versagen von elektronischen Produkten ist eine Funktion von physikalischen Ausfallmechanismen, die dazu führen, dass elektrische/elektronische (E/E)-Komponenten abbauen und schließlich fehlschlagen. Es wird der Verschleißgrad der E/E-Hardware eines Steuergerätes als Ganzes berechnet. Die Schätzung des Verschleißgrades basiert auf dem Arrhenius-Modell, welches eine temperaturabhängige Alterung bestimmt.

Die Ausfallzeit tₖ eines Bauteils hängt nach dem Arrhenius-Modell beispielsweise wie folgt von der Temperatur T in °C ab: ${t}_{k} \left(T\right) = {t}_{r} exp \left(\frac{{T}_{a}}{T - {T}_{∞}}\right)$

Dabei wird ein Alterungsverhalten wie bei einer chemischen Reaktion erster Ordnung zugrunde gelegt. Da durch Messungen bei höheren Temperaturen Rückschlüsse auf die Alterung bei niedrigeren, praktisch relevanten Temperaturen gezogen werden können (in denen die Ausfallzeiten in der Größenordnung von Jahren liegen können), wird der Exponentialausdruck rechts auch Arrhenius-Beschleunigungsfaktor genannt. Das Arrhenius-Modell kann aber auch als Look-up-Tabelle oder Polynomfunktion 4. oder 6. Ordnung implementiert werden.

Als Eingangswert für das Arrhenius-Modell 9 dient die gemessene Umgebungstemperatur 10 des Steuergeräts in °C. Das Modell wird mit einer Frequenz von 1 Hz ausgeführt, um die Schätzung durchzuführen. Das Modell schätzt die verstrichene Lebensdauer 11 der Steuergeräte-Hardware in Stunden.

In einer Umwandlungseinheit 12 wird die in Stunden geschätzte verstrichene Lebensdauer 11 der Steuergeräte-Hardware mittels der vordefinierten Gesamtlebensdauer 13 in einen prozentualen Verschleißgrad 14 umgerechnet.

Es wurde festgestellt, dass die in dem Steuergerät des Handkraftaktuators und des Radwinkelstellers befindlichen DC-Link-Kondensatoren (Zwischenkreiskondensatoren) am schnellsten das Lebensdauerende erreichen. Sie erreichen das Lebensdauerende 10x schneller als die verbauten MOSFETs und 100x schneller als andere elektronische Komponenten. Sie sind somit die ausschlaggebenden Komponenten, so dass die Schätzung des Verschleißgrades der gesamten Steuergeräte-Hardware auf der verstrichenen Lebensdauer der DC-Link-Kondensatoren basiert.

Die in der Berechnung verwendete vordefinierte Gesamtlebensdauer 13 ist somit die vordefinierte Gesamtlebensdauer der DC-Link-Kondensatoren. Zur Schätzung des Verschleißgrades des ersten Steuergerätes wird vorzugsweise die gemessene Temperatur der Platine als Umgebungstemperatur 10 eingesetzt. Bei dem zweiten Steuergerät wird hingegen zur Schätzung des Verschleißgrads bevorzugt die gemessene Kerntemperatur des Prozessors (CPU) als die gemessene Umgebungstemperatur 10 für das Modell 9 verwendet.

Der geschätzte Verschleißgrad 14 wird an eine Verschleißwarnkomponente 15 gesendet, die ein Signal ausgibt, wenn das Steuergerät eine Warnstufe (kurz vor Ablauf der vordefinierten Gesamtlebensdauer) erreicht hat, so dass der Fahrer, Erstausrüster (OEM) oder eine Werkstatt die Möglichkeit hat, das System auszutauschen, bevor Probleme auftreten können.

Um die Sicherheit zu erhöhen gibt es zwei vordefinierte Schwellenwerte für den geschätzten Verschleißgrad und damit einhergehend zwei Warnstufen. Bei Überschreitung eines ersten Schwellenwerts wird ein entsprechender Diagnose-Ereigniscodes in einem nichtflüchtigen Speicher gespeichert 16. Bei Überschreitung eines zweiten Schwellenwerts, der oberhalb des ersten Schwellenwertes liegt und somit näher an der tatsächlichen vordefinierten Gesamtlebensdauer, wird eine Warnleuchte über die CAN-Schnittstelle des Fahrzeugs aktiviert 17. Bevorzugt liegt der erste Schwellenwert bei einem geschätzten Verschließgrad von 90% und der zweite Schwellenwert bei einem geschätzten Verschließgrad von 98%. Zusätzlich zu dem geschätzten Verschleißgrad wird noch die Betriebsdauer 18 des Steuergerätes in Sekunden bestimmt. Diese Funktion ist nicht immer vorhanden. Die Berechnung der Betriebszeit des Steuergeräts ist eine zusätzliche Option.

## Patentansprüche

1. Steuergerät einer Kraftfahrzeuglenkung (1), wobei das Steuergerät eine Verschleißschätzeinrichtung aufweist, die basierend auf einer gemessenen Temperatur (10) mittels Arrhenius-Modell (9) eine verstrichene Lebensdauer (11) schätzt und daraus basierend auf einer vordefinierten Gesamtlebensdauer (13) der Steuergeräte-Hardware einen Verschleißgrad (14) der Steuergeräte-Hardware bestimmt, **dadurch gekennzeichnet, dass** die vordefinierte Gesamtlebensdauer (13) der Steuergeräte-Hardware die vordefinierte Gesamtlebensdauer von DC-Link-Kondensatoren der Steuergeräte-Hardware ist, und dass die Verschleißschätzeinrichtung eine Verschleißwarnkomponente (15) umfasst, die dazu ausgebildet ist, bei Überschreiten eines vordefinierten Verschleißgradschwellenwertes ein Warnsignal (16,17) auszugeben.

2. Steuergerät nach Anspruch 1, **dadurch gekennzeichnet, dass** das Arrhenius-Modell (9) als Exponentialfunktion, Look-up-Tabelle oder Polynomfunktion 4. oder 6. Ordnung implementiert ist.

3. Kraftfahrzeuglenkung (1) mit einem Steuergerät nach Anspruch 1 oder Anspruch 2.

4. Kraftfahrzeuglenkung nach Anspruch 3, **dadurch gekennzeichnet, dass** die Kraftfahrzeuglenkung eine Steer-by-Wire-Lenkung ist und das Steuergerät einem Handkraftaktuator (8) oder einem Radwinkelsteller (5) zugeordnet ist.

5. Verfahren zur Steuerung einer Kraftfahrzeuglenkung (1) aufweisend ein Steuergerät und eine Verschleißschätzeinrichtung mit Verschleißwarnkomponente (15), wobei das Verfahren die folgenden Schritte umfasst:
a. Schätzen einer verstrichenen Lebensdauer (11) der Steuergeräte-Hardware basierend auf einer gemessenen Temperatur (10) mittels Arrhenius-Modell (9),
b. Umwandeln der geschätzten verstrichenen Lebensdauer (11) der Steuergeräte-Hardware mittels einer vordefinierten Gesamtlebensdauer (13) der Steuergeräte-Hardware in einen prozentualen Verschleißgrad (14),
c. Weitergabe des geschätzten Verschleißgrades (14) an eine Verschleißwarnkomponente (15) und Ausgabe eines Warnsignals (16,17), wenn der geschätzte Verschleißgrad einen vordefinierten Schwellenwert überschreitet;
wobei die in Schritt b. verwendete vordefinierte Gesamtlebensdauer (13) die vordefinierte Gesamtlebensdauer von DC-Link-Kondensatoren ist.

6. Verfahren nach Anspruch 5, **dadurch gekennzeichnet, dass** das Arrhenius-Modell (9) in Schritt a. als Exponentialfunktion, Look-up-Tabelle oder Polynomfunktion 4. oder 6. Ordnung implementiert ist.

7. Verfahren nach Anspruch 5 oder 6, **dadurch gekennzeichnet, dass** die gemessene Temperatur (10) die gemessene Temperatur der Platine des Steuergerätes oder die gemessene Kerntemperatur des Prozessors des Steuergerätes ist.

8. Verfahren nach einem der Ansprüche 5 bis 7, **dadurch gekennzeichnet, dass** in Schritt c. zwei vordefinierte Schwellenwerte verwendet werden, wobei bei Überschreiten des ersten Schwellenwertes ein Diagnose-Ereigniscode gespeichert wird (16) und bei Überschreiten des zweiten Schwellenwertes eine Warnleuchte aktiviert wird (17).

## Claims

1. Control unit for a motor vehicle steering system (1), wherein the control unit comprises a wear estimation device that estimates an elapsed service life (11) based on a measured temperature (10) using the Arrhenius model (9) and, based on this, determines a wear level (14) of the control unit hardware based on a predefined total service life (13) of the control unit hardware, **characterized in that** the predefined total service life (13) of the control unit hardware is the predefined total service life of DC-link capacitors of the control unit hardware, and that the wear estimation device comprises a wear warning component (15) configured to output a warning signal (16, 17) when a predefined wear level threshold value is exceeded.

2. The control unit according to claim 1, **characterized in that** the Arrhenius model (9) is implemented as an exponential function, a look-up table, or a 4th- or 6th-order polynomial function.

3. Motor vehicle steering system (1) comprising a control unit according to claim 1 or claim 2.

4. The motor vehicle steering system according to claim 3, **characterized in that** the motor vehicle steering system is a steer-by-wire steering system and the control unit is associated with a hand wheel actuator (8) or a wheel angle actuator (5).

5. A method for controlling a motor vehicle steering system (1) comprising a control unit and a wear estimation device with a wear warning component (15), wherein the method comprises the following steps:
a. Estimating an elapsed service life (11) of the control unit hardware based on a measured temperature (10) using the Arrhenius model (9),
b. Converting the estimated elapsed service life (11) of the control unit hardware into a percentage wear level (14) using a predefined total service life (13) of the control unit hardware,
c. Forwarding the estimated wear level (14) to a wear warning component (15) and outputting a warning signal (16, 17) if the estimated wear level exceeds a predefined threshold value;
wherein the predefined total service life (13) used in step b. is the predefined total service life of DC-link capacitors.

6. The method according to claim 5, **characterized in that** the Arrhenius model (9) in step a. is implemented as an exponential function, a look-up table, or a 4th- or 6th-order polynomial function.

7. The method according to claim 5 or 6, **characterized in that** the measured temperature (10) is the measured temperature of the control unit's circuit board or the measured core temperature of the control unit's processor.

8. The method according to any one of claims 5 to 7, **characterized in that**, in step c, two predefined threshold values are used, wherein a diagnostic event code is stored (16) when the first threshold value is exceeded, and a warning light is activated (17) when the second threshold value is exceeded.

## Revendications

1. Calculateur d'un système de direction de véhicule automobile (1), ledit calculateur comportant un dispositif d'estimation de l'usure qui, sur la base d'une température mesurée (10), estime une durée de vie écoulée (11) à l'aide du modèle d'Arrhenius (9) et, à partir de celle-ci, détermine un degré d'usure (14) du matériel du calculateur sur la base d'une durée de vie totale prédéfinie (13) dudit matériel, **caractérisé en ce que** la durée de vie totale prédéfinie (13) du matériel du calculateur correspond à la durée de vie totale prédéfinie des condensateurs du circuit intermédiaire en courant continu (DC-Link) du matériel du calculateur, et **en ce que** le dispositif d'estimation de l'usure comprend un composant d'alerte d'usure (15) conçu pour émettre un signal d'alerte (16, 17) en cas de dépassement d'un seuil prédéfini de degré d'usure.

2. Calculateur selon la revendication 1, **caractérisé en ce que** le modèle d'Arrhenius (9) est mis en œuvre sous la forme d'une fonction exponentielle, d'une table de consultation ou d'une fonction polynomiale du 4e ou du 6e ordre.

3. Système de direction de véhicule automobile (1) comprenant un calculateur selon la revendication 1 ou la revendication 2.

4. Système de direction de véhicule automobile selon la revendication 3, **caractérisé en ce que** le système de direction de véhicule automobile est une direction « steer-by-wire » et **en ce que** le calculateur est associée à un actionneur de force manuelle (8) ou à un actionneur d'angle de roue (5).

5. Procédé de commande d'un système de direction de véhicule automobile (1) comprenant un calculateur et un dispositif d'estimation de l'usure avec un composant d'alerte d'usure (15), le procédé comprenant les étapes suivantes :
a. estimer une durée de vie écoulée (11) du matériel du calculateur sur la base d'une température mesurée (10) à l'aide du modèle d'Arrhenius (9),
b. convertir de la durée de vie écoulée estimée (11) du matériel du calculateur, à l'aide d'une durée de vie totale prédéfinie (13) de ce matériel, en un degré d'usure (14) exprimé en pourcentage,
c. transmettre du degré d'usure estimé (14) à un composant d'alerte d'usure (15) et émettre d'un signal d'alerte (16, 17) lorsque le degré d'usure estimé dépasse une valeur seuil prédéfinie ;
la durée de vie totale prédéfinie (13) utilisée à l'étape b. étant la durée de vie totale prédéfinie des condensateurs du circuit intermédiaire en courant continu (DC-Link).

6. Procédé selon la revendication 5, **caractérisé en ce que** le modèle d'Arrhenius (9) est mis en œuvre à l'étape a. sous la forme d'une fonction exponentielle, d'une table de consultation ou d'une fonction polynomiale du 4e ou du 6e ordre.

7. Procédé selon la revendication 5 ou 6, **caractérisé en ce que** la température mesurée (10) est la température mesurée de la carte du calculateur ou la température interne mesurée du processeur du calculateur.

8. Procédé selon l'une des revendications 5 à 7, **caractérisé en ce que**, à l'étape c., deux seuils prédéfinis sont utilisés, un code d'événement de diagnostic étant enregistré (16) en cas de dépassement du premier seuil et un voyant d'alerte étant activé (17) en cas de dépassement du deuxième seuil.
